(19) Europäisches Patentamt
European Patent Office
Office européen des brevets

(11) EP 3 599 442 A1

(12) **EUROPEAN PATENT APPLICATION**

(43) Date of publication:
29.01.2020 Bulletin 2020/05

(51) Int Cl.:
F42B 10/14 (2006.01)  B64C 5/00 (2006.01)
B64C 9/00 (2006.01)

(21) Application number: 18275105.7

(22) Date of filing: 23.07.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: MBDA UK Limited
Stevenage, Hertfordshire SG1 2DA (GB)

(72) Inventor: **The designation of the inventor has not yet been filed**

(74) Representative: **BAE SYSTEMS plc**
**Group IP Department**
**Farnborough Aerospace Centre**
**Farnborough**
**Hampshire GU14 6YU (GB)**

(54) **GRID FINS**

(57) The present invention provides a grid fin 101 comprising a lattice of a multiplicity of aerodynamic surfaces 102 arranged such that air can flow through the lattice and over the aerodynamic surfaces, each aerodynamic surface having a leading edge 104, wherein a plurality of the leading edges have a planform shape defined by a hyperbolic curve 214. The invention also provides a vehicle or projectile provided with a number of grid fins and methods of designing, modelling and manufacturing grid fins.

Figure 8

## Description

FIELD OF THE INVENTION

This invention relates to the field of grid fins, as well as a vehicle or projectile provided with grid fins, methods of designing grid fins and methods of manufacturing grid fins.

BACKGROUND ART

Grid fins (or lattice/waffle wings) can be used, as an alternative to conventional monoplane fins or wings, to provide aerodynamic lift, stability, and control, on flight vehicles (or projectiles). More usually, but not exclusively, grid fins are an option for supersonic and hypersonic flight vehicles such as missiles and rockets. Grid fins are generally comprised of an aerodynamic structural frame within which multiple aerodynamic surfaces (aerofoils/plates) are interlinked into a grid arrangement, such that air can flow through the open cells in between.

One of the known advantages of grid fins, when compared to monoplane fins, is that of a significantly reduced hinge moment, due largely to the much shorter chord (the distance between the leading and trailing edges). This allows for potential integration of smaller, lighter, less powerful fin actuator motors, with associated knock-on benefits, such as overall weight and power requirements, to the flight vehicle or projectile. Other benefits include improved packaging if the fins are required to fold, higher strength to weight ratio, and maintenance of control effectiveness and stability to higher flight incidences.

Historically grid fins have nearly always employed straight edges, with all leading edges in one plane, and all trailing edges in a second plane one chord length further aft. More recently grid fin designs have emerged whereby the leading and/or trailing edges of each cell form an inward or outward "V", generating an overall zig-zag of adjacent edges across the grid fin, as shown in Figure 1. Rarely the leading edges are curved, although US 7,114,685 discloses one embodiment of a manually specified curvilinear leading edge, such as a sinusoidal curve. SpaceX (Space Exploration Technologies Corp.) have also very recently flown grid fins with curved leading edges to aid recovery of their rocket motors.

The chord-wise leading edge profiles of grid fins (particularly for supersonic applications) are usually manufactured to have as sharp an edge as possible (allowing for manufacturing tolerances and material strength). At supersonic speeds, oblique shock waves that form at each edge pass into the adjacent grid cell. However, these shock waves interfere with each other, reducing performance of the grid fin.

The main disadvantage of these prior art grid fins, when compared to monoplane fins, is a higher drag coefficient, especially in the transonic flight regime. Consequently, grid fins have rarely been adopted on flight vehicles as efficient lift surfaces, but more usually as stabilising devices or drag brakes, such as for the SpaceX example.

It would be advantageous to provide a grid fin in which one or more of the aforementioned disadvantages is eliminated or at least reduced.

SUMMARY

In accordance with a first aspect of the invention, there is provided a grid fin comprising a lattice of a multiplicity of aerodynamic surfaces arranged such that air can flow through the lattice and over the aerodynamic surfaces, each aerodynamic surface having a leading edge, wherein a plurality of the leading edges have a planform shape defined by a hyperbolic curve.

Having a hyperbolic curve for the leading edge planform shape provides for a lower drag, in particular a lower wave drag. This means that the grid fins could be used as efficient lift and control devices/surfaces for supersonic flight vehicles.

A hyperbolic curve is defined as the intersection between a cone and a plane and is governed by the equation:

$$\frac{x^2}{a^2} - \frac{y^2}{b^2} = 1$$

Where x is the axial distance along the cone axis (x axis) and y is the lateral distance from the cone axis (along the y axis). a and b are constants for a given hyperbolic curve.

By the laws of geometry, $a^2$ is equal to $K^2\cot^2\beta$ and $b^2$ is equal to $K^2$. So:

$$\frac{x^2}{K^2\cot^2\beta} - \frac{y^2}{K^2} = 1$$

where K is the distance of the plane from the cone axis (x axis) in the z-direction and $\beta$ is the cone angle.

Preferably, the hyperbolic curve of at least one of the leading edges curves backwards away from the front of the aerodynamic surface. In other words, the leading edge does not protrude into the oncoming flow. Alternatively, the hyperbolic curve of at least one of the leading edges curves forwards from the front of the aerodynamic surface. In other words, the leading edge protrudes into the flow. In the above, "front" relates to the oncoming flow direction (flow facing) and the leading (front) edge (as opposed to the trailing edge).

Preferably, the hyperbolic curve planform shape of at least one of the leading edges extends the length of the leading edge. This allows the different hyperbolic curves to be adjacent each other to provide a compact and efficient arrangement.

Preferably, side edges of a plurality of the aerodynamic surfaces are parallel to each other. In other words, the aerodynamic surfaces extend parallel to the oncoming air flowing through the lattice. This provides a flow cross-sectional space between the aerodynamic surfaces that is constant.

Preferably, the lattice is in a form of a grid, made up of a number of grid cells, each aerodynamic surface forming a wall of a grid cell.

Preferably, hyperbolic curve planform shape for at least one of the leading edges is defined by the intersection of a conical shock flow field and the aerodynamic surface corresponding to the leading edge. This means that if each aerodynamic surface forms a wall of a grid cell, the grid cells are modelled as "wave catchers" of the conical shock flow field produced by the hyperbolic curve leading edge of the grid cell walls.

More preferably, a grid cell has been designed by being centred on an axis of the conical shock flow field. This means that each grid cell wall has the same planform of leading edge shape (i.e. the same hyperbolic curve, defined by the same constants). In other words, the leading edge shape of the grid cell has been derived from the grid cell being centred on the same parent conical shock flow field. This means that each grid cell wall has the same leading edge planform shape (i.e. the same hyperbolic curve, defined by the same constants).

Even more preferably, each grid cell of the grid fin has been designed by being centred on the axis of the same conical shock flow field. This means that each grid cell wall of each grid cell has the same planform of leading edge shape (i.e. the same hyperbolic curve, defined by the same constants). In other words, the leading edge shape of each of the grid cells has been derived from each of the grid cells being centred on the same parent conical shock flow field. This means that each grid cell wall of each grid cell has the same leading edge planform shape (i.e. the same hyperbolic curve, defined by the same constants).

Alternatively, the overall leading edge shape of the grid fin is swept so as to be at an acute angle in relation to the through-lattice direction. This means that to calculate the leading edge shape of each grid cell wall, each grid cell is off-centre of the conical shock.

Preferably, the conical shock flow field applied is a Busemann flow, and preferably a truncated Busemann flow based on a defined leading edge tip angle. The tip angle may be between 0 and 20, preferably around 5-10 degrees, and preferably around 7 degrees. Lower angles in the range 0 to 20 degrees are aerodynamically preferable, but potentially limited by manufacture.

The truncation may be defined by an inward conical flow "A" (ICFA).

Preferably, the conical shock flow field applied corresponds to a Mach number of between 1.5 and 5, and more preferably between 2 and 4.

Preferably, the grid cells form a tessellating pattern.

More preferably, the grid cells are all the same shape, that shape being square, triangular or hexagonal, or another tessellating shape.

Alternatively, the grid cells are a mixture of different shapes, the mixture of shapes providing the tessellating pattern.

In accordance with a second aspect of the invention, there is provided a vehicle or projectile provided with a number of grid fins as described above.

Preferably, the vehicle or projectile is a flight vehicle/projectile, and preferably a supersonic or hypersonic flight vehicle/projectile, such as an aircraft, spacecraft, rocket or missile. The vehicle or projectile may be hydrodynamic.

Preferably, the grid fins are moveably mounted on the vehicle/projectile so as to be moveable between a stowed and a deployed position in relation to the vehicle/projectile.

Preferably, the grid fins are moveably mounted on the vehicle/projectile so as to be rotatable to provide control of the vehicle/projectile.

In accordance with a third aspect of the invention, there is provided a method of designing a grid fin comprising the steps of selecting a grid cell cross-sectional shape of a grid cell of the grid fin, defining a conical shock and subsequent flow field at a chosen flight condition, and deriving a resulting planform design for leading edges of aerodynamic surfaces providing walls of the grid cell. The deriving step is based on "wave catching" of the parent conical flow field by the grid cell walls. The resulting planform design is a hyperbolic curve.

In accordance with a fourth aspect of the invention, there is provided a computer implemented method of modelling a grid fin comprising the steps of selecting a grid cell cross-sectional shape of a grid cell of the grid fin, defining a conical shock and subsequent flow field at a chosen flight condition, and deriving a resulting planform design for a leading edges of aerodynamic surfaces providing walls of the grid cell. The deriving step is based on "wave catching" of the parent conical flow field by the grid cell walls. The resulting planform design is a hyperbolic curve.

Preferably, the method of designing a grid fin or the computer implemented method of modelling a grid fin, further includes the step of defining aerodynamic surfaces as grid cell walls aft of the leading edges.

In accordance with a fifth aspect of the invention, there is provided a method of manufacturing a grid fin comprising the steps of manufacturing an aerodynamic surface with a leading edge planform as designed or modelled as described above, and assembling a plurality of such aerodynamic surfaces into a lattice such that air can flow through the lattice and over the aerodynamic surfaces.

It will be appreciated that features described in relation to one aspect of the present invention can be incorporated into other aspects of the present invention. For example, an apparatus of the invention can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

BRIEF DESCRIPTION OF THE DRAWINGS

Example embodiments of the invention will now be described by way of example only and with reference to the accompanying drawings, of which:

> Figure 1 is a prior art grid fin (100'), as shown in US 7,114,685;
> Figure 2 is a schematic illustration of a step in the method of designing a grid fin according to the present invention;
> Figure 3 is a schematic illustration of an alternative step in the method of designing a grid fin according to the present invention;
> Figure 4 is a schematic illustration of another step in the method of designing a grid fin according to the present invention;
> Figure 5 is a schematic illustration of another step in the method of designing a grid fin according to the present invention;
> Figure 6 is a perspective view of two grid cells designed using a method similar to that illustrated in Figures 2 to 5;
> Figure 7 is a top view of the two grid cells in Figure 6; and
> Figure 8 is a perspective view of a grid fin formed of grid cells like the first grid cell of Figures 6 and 7.

For convenience and economy, the same reference numerals are used in different figures to label identical or similar elements of the embodiments shown.

DETAILED DESCRIPTION

Embodiments are described herein in the context of approaches to improve grid fins and the method of design of grid fins.

Those of ordinary skill in the art will realize that the following detailed description is illustrative only and is not intended to be in any way limiting. Other embodiments of the present invention will readily suggest themselves to such skilled persons having the benefit of this disclosure. Reference will be made in detail to implementations as illustrated in the accompanying drawings. The same reference indicators will be used throughout the drawings and the following detailed description to refer to the same or like parts.

The method is based around the idea of defining a leading edge shape and initial chord-wise profile for the walls (aerodynamic surfaces) of each cell of the grid fin, in order to significantly reduce its wave drag. The leading edge shape is defined by the intersection of the cell walls with an inward turning conical shock wave. The inward turning conical shock wave is itself defined by the chosen onset design Mach number and the leading edge profile angle of a parent truncated Busemann flow field. The perimeter of each grid cell hence forms the leading edge of a "wave catcher intake" that reproduces the captured part of the parent conical shock. In other words, each cell is designed so as to function as a separate wave catcher, and to contain a single conical shock wave within each cell that reduced wave drag.

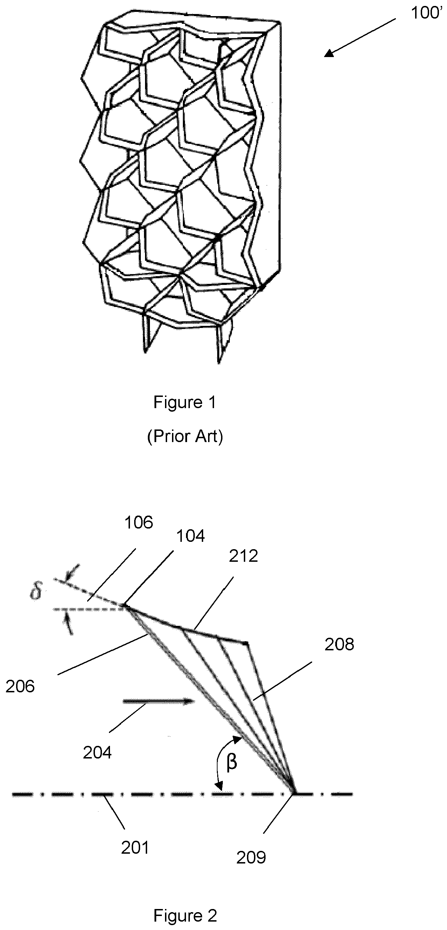

Figure 2 is a schematic illustration of a first step in an example embodiment method of designing a grid fin 100. Figure 2 shows the leading edge profile 212 of a surface of revolution about an x axis 201 creating an inward conical shock wave 206 and subsequent isentropic conical flow field waves 208 when subjected to a uniform supersonic freestream flow 204.

The method step of Figure 2 involves establishing a parent inward turning conical shock wave 206 and subsequent ICFA (Inward Conical Flow "A") Mach waves 208, both with a common focal point 209. The chosen initial leading edge 104 tip angle $\delta$ 106 combined with the Mach number of the upstream airflow 204 establishes the angle $\beta$ of the leading inward conical shock wave 206. The Taylor Maccoll equation is used to define the ICFA, as would be understood by a skilled person in the art. It is recognised that theoretically, for least drag, the leading edge angle should be as small as possible and perfectly sharp, but that in reality there will be limitations due to manufacturing tolerances and material strength.

This leading edge tip angle $\delta$ is 7 degrees here (shown exaggerated for clarity). The method also involves establishing the Mach number for which the grid fin design is to be optimised. Here, the Mach number chosen is 4.0. The incidence angle of the freestream flow onto the tip is assumed to be zero i.e. aligned with the conical axis. Established shock theory within the art reveals that the resultant angle $\beta$ of the inward conical shock wave for this example is 19.63 degrees.

The flow field has an upstream air flow 204 and a low-loss discrete entry shock wave 206 coinciding with the leading edge 104 and a focal point 209 on a notional x axis 201 of the model. The flow field also has intermediate (isentropic compression) shock waves 208.

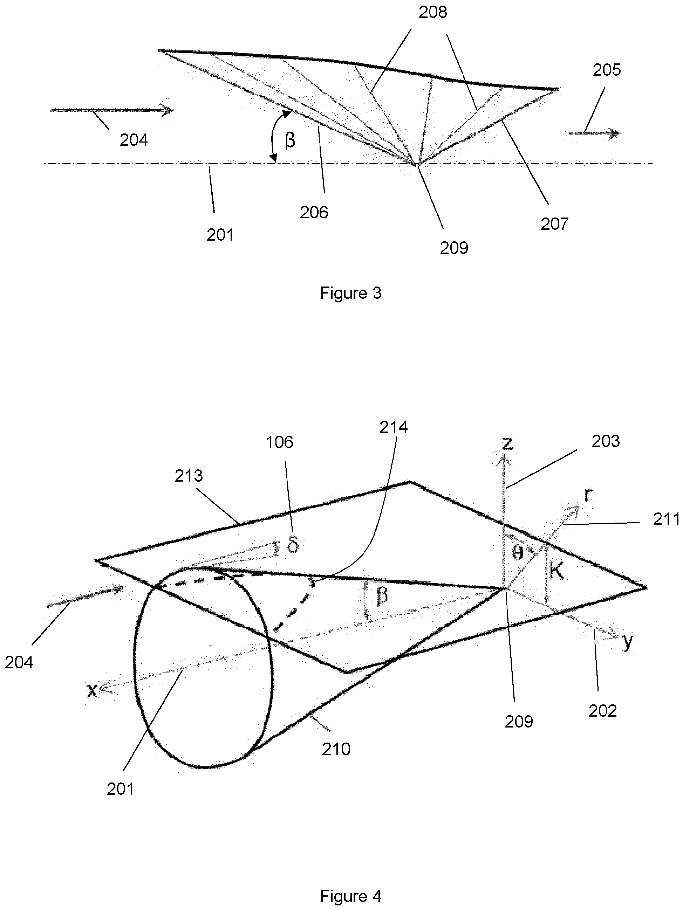

Figure 3 is a schematic illustration of an alternative step (alternative to Figure 2) in the method of designing a grid fin 100 according to the present invention. Here, again, there is an air flow in 204 at a Mach number of 4.0. The tip angle δ is 7 degrees.

In this alternative step, the grid cell design is based on shock capture of a truncated Busemann flow field that does not have an ICFA at the leading edge. The flow field has an upstream air flow 204 and a low-loss discrete entry shock wave 206 coinciding with the leading edge 104 and a focal point 209 on a notional x axis 201 of the model. The flow field also has intermediate (isentropic compression) shock waves 208.

However, here, without the ICFA, the leading shock wave would not be perfectly conical, deviating close to the axis, and no longer focused at a point. Derivation of the hyperbolic grid cell leading edge planform would no longer be analytical, but instead would require stream-tracing of a CFD (Computational Fluid Dynamics) solution. In practice, however, the difference away from the axis is likely to be small, such that the analytical solution may still suffice.

The tip angle δ and Mach number are used to model a truncated Busemann flow field. Again, the flow field has an upstream air flow 204 and a low-loss discrete entry shock wave 206 coinciding with the leading edge 104 and a focal point 209 on a notional x axis 201 of the model. Again, intermediate (isentropic compression) shock waves 208 are shown, together with a low-loss discrete exit shock wave 207. A downstream air flow 205 is also illustrated. This air flow 205 is at a lower Mach number and a higher pressure than the air flow at 204 (at Mach number 4.0).

Figure 4 is a schematic illustration of another step in the method of designing a grid fin 101 according to the present invention. The entry inward conical shock wave 206 of the parent flow field, shown in sectional view in Figure 2, is shown here as a surface of revolution about its axis 201. A horizontal planar surface 213 (i.e. in the x-y plane) is shown to intersect the inward cone at a height K vertically in the z direction from the cone axis. The resulting hyperbolic intersection curve 214 forms one of the leading edges of a grid cell 101 according to this invention.

Also in Figure 4 we show θ as the circumferential angle around the cone axis, this being positive clockwise from vertical when looking downstream, and r (labelled 211) the radial distance from the axis at angle θ.

Also shown for clarity is the z (vertical) axis 203 and the y (lateral) axis 202.

The leading edge planform resulting from the intersection of the plane and the cone is described by a hyperbolic equation, which has the general form:

$$\frac{x^2}{a^2} - \frac{y^2}{b^2} = 1$$

where x and y are the axial and lateral axes as shown in Figure 4, whilst a and b are constants based on a plane height K and conical shock angle β ($a^2$ is equal to $K^2\cot^2\beta$ and $b^2$ is equal to $K^2$).

Consideration of the intersection geometry reveals a particular form for the hyperbolic equation used here to define the leading edge planform:

$$\frac{x^2}{K^2\cot^2\beta} - \frac{y^2}{K^2} = 1$$

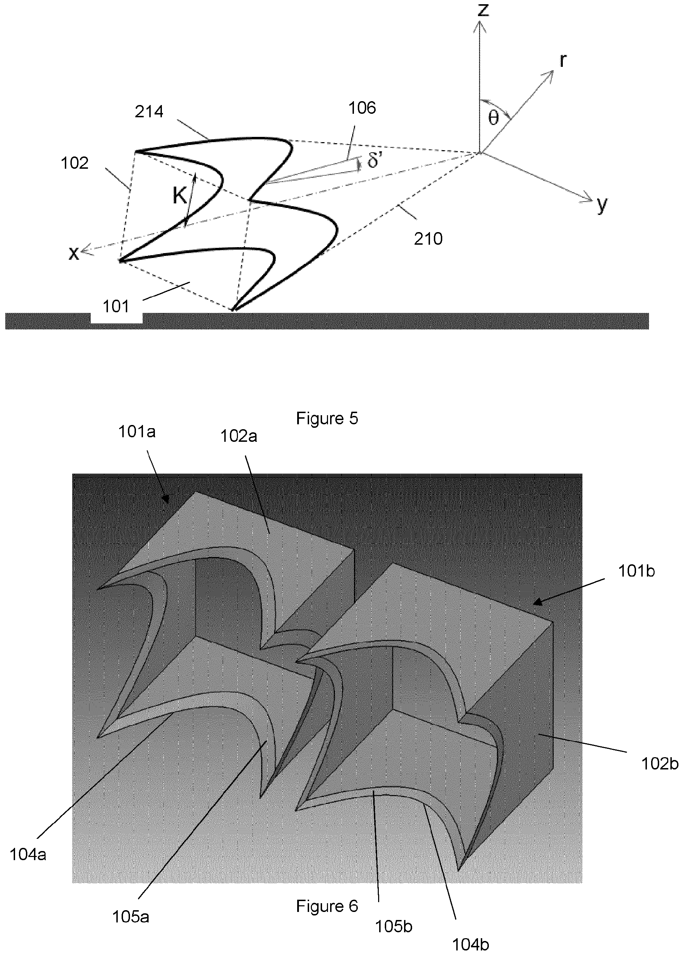

Figure 5 is a schematic illustration of another step in the method of designing a grid cell 101 according to the present invention. Here, the method described for Figure 4 is used to also model the hyperbolic leading edge curve 214 of the lower horizontal cell wall, as well as the two vertical cell walls, thus forming a square sectioned "wave catcher intake" grid cell in this example. The four leading edges 214 (backwardly extending hyperbolic curves) of the four grid cell walls 102 are shown in bold.

In the example, since the square grid cell is centered on the model, the (plane height) distance, K, corresponds to half the height of the grid cell 101. K is non-dimensionalised with respect to the conical radius r, and so is a proportion between 0 and 1. Here, $K^2$ is 0.5.

δ is the local tip angle of the leading edge in a plane normal to the planform, and relates via simple trigonometry to the tip angle δ of the parent conical geometry.

Figure 6 is a perspective view of two centred square grid cells designed according to this invention. Grid cell 101a on the left hand side was designed using the method described above with a Mach number of 4.0 and a tip angle δ of 7 degrees, and a resultant conical shock angle β of 19.63 degrees. The cell walls 102a of this cell 101a have a hyperbolic curve 104a as its leading edge planform. In the figure, for simplicity of an example, the cell walls have been extended downstream parallel to the x-axis, and the trailing edges of the cells are straight and normal to the x-axis. Grid cell 101b on the right hand side was similarly designed using a Mach number of 2.75 and a tip angle δ of 7 degrees, and a resultant conical shock angle β of 26.71 degrees.

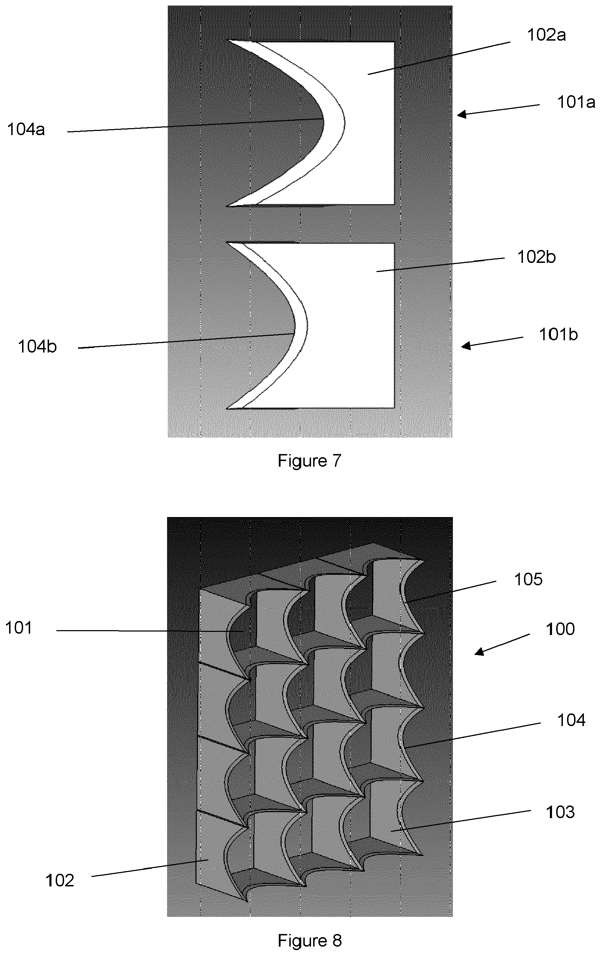

Figure 7 is a plan (top) view of the two grid cells of Figure 6. The different hyperbolic leading edge curves 104a, 104b can be seen more easily; the Mach 4.0 design 104a being a deeper curve than that of the Mach 2.75 design 104b.

Figure 8 is a perspective view of a complete grid fin 100 formed by tessellating 12 grid cells 101 designed according to this invention. In this example, each grid cell 101 is square and made up of four cell walls 102. Each cell wall 102 is an aerodynamic surface (or fin) 103 with a hyperbolic leading edge planform 104 and a tip profile 105 derived from the ICFA of the parent flow field.

In this figure, for simplicity, the grid cells have been tessellated with their edges horizontal and vertical.

The ICFA chord wise profile is seen as ideal, but not essential. A simple straight wedge chord wise profile could alternatively be adopted, and would perhaps be easier to manufacture, whilst resulting in negligible change to the performance.

Since the leading edges of each wall of a grid cell designed by this method are derived from the same parent conical shock, together they will produce part of the same single conical shock within each grid cell, i.e. without the shock interferences of more conventional grid fins. This should improve the performance of the grid fin via reduced wave drag.

While the present disclosure has been described and illustrated with reference to particular embodiments, it will be appreciated by those of ordinary skill in the art that the disclosure lends itself to many different variations not specifically illustrated herein.

In another example, a hexagonal cell shape may be used.

In other examples, a variety of cell shapes that tessellate, for example hexagons and triangles, may be used.

In other examples, the grid fin 100 may be swept.

In other examples, the leading edge profiles are designed based on the grid cell being off-centre of the conical shock 210. This would produce different leading edge planform shapes for each wall of the grid cell, effectively forming a swept version of the grid cell.

In other examples, the shape of the trailing edges are also shaped, for example so as to have a swept, curved, for example a hyperbolic curved, planform.

In other examples, the angle and/or surface of the aerodynamic surface (cell walls) may be designed to be more complex than as shown here, where they are straight and parallel to the notional airflow (through lattice) direction.

In the above described examples, the square grid cells have been tessellated with their walls vertical and horizontal. However, alternatively, any other rotational orientation about the x axis may be used.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

**Claims**

1. A grid fin comprising a lattice of a multiplicity of aerodynamic surfaces arranged such that air can flow through the lattice and over the aerodynamic surfaces, each aerodynamic surface having a leading edge, wherein a plurality of the leading edges have a planform shape defined by a hyperbolic curve.

2. A grid fin as claimed in claim 1, wherein the hyperbolic curve of at least one of the leading edges curves backwards away from the front of the aerodynamic surface.

3. A grid fin as claimed in claim 1 or claim 2, wherein the hyperbolic curve planform shape of at least one of the leading edges extends the length of the leading edge.

4. A grid fin as claimed any preceding claim wherein side edges of a plurality of the aerodynamic surfaces are parallel to each other.

5. A grid fin as claimed in any preceding claim, wherein the lattice is in a form of a grid, made up of a number of grid cells, each aerodynamic surface forming a wall of a grid cell.

6. A grid fin as claimed in claim 5, wherein the hyperbolic curve planform shape for at least one of the leading edges is defined by the intersection of a conical shock flow field and the aerodynamic surface corresponding to the leading edge.

7. A grid fin as claimed in claim 6, wherein a grid cell has been designed by being centred on an axis of the conical shock flow field.

8. A grid fin as claimed in claim 7, wherein each grid cell of the grid fin has been designed by being centred on the axis of the same conical shock flow field.

9. A grid fin as claimed in any of claims 6 to 8, wherein the conical shock flow field applied is a Busemann flow, and preferably a truncated Busemann flow based on a defined leading edge tip angle.

10. A grid fin as claimed in any of claims 5 to 9, wherein the grid cells form a tessellating pattern, and wherein the grid cells are either: all the same shape, that shape being square, triangular or hexagonal, or another tessellating shape; or a mixture of different shapes, the mixture of shapes providing the tessellating pattern.

11. A grid fin as claimed in any preceding claim, wherein the overall leading edge shape of the grid fin is swept so as to be at an acute angle in relation to the through-lattice direction.

12. A vehicle or projectile provided with a number of grid fins as claimed in any preceding claim, wherein the vehicle or projectile is a flight vehicle/projectile, and preferably a supersonic or hypersonic flight vehicle/projectile, such as an aircraft, spacecraft, rocket or missile.

13. A vehicle or projectile as claimed in claim 12, wherein the grid fins are moveably mounted on the vehicle/projectile so as to be moveable between a stowed and a deployed position in relation to the vehicle/projectile.

14. A method of designing a grid fin comprising the steps of:

    - selecting a grid cell cross-sectional shape of a grid cell of the grid fin,
    - defining a conical shock and subsequent flow field at a chosen flight condition, and
    - deriving a resulting planform design for leading edges of aerodynamic surfaces providing walls of the grid cell.

15. A method of designing a grid fin as claimed in claim 19, wherein the method further includes the step of defining aerodynamic surfaces as grid cell walls aft of the leading edges.

Figure 1

(Prior Art)

Figure 2

Figure 3

Figure 4

Figure 5

Figure 6

102a

101a

104a

102b

101b

Figure 7

105

100

101

104

103

102

Figure 8

Europäisches
Patentamt

European
Patent Office

Office européen
des brevets

## EUROPEAN SEARCH REPORT

Application Number

EP 18 27 5105

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 7 114 685 B1 (DEUTSCH ZENTR LUFT & RAUMFAHRT [DE]) 3 October 2006 (2006-10-03) | 14,15 | INV. F42B10/14 B64C5/00 B64C9/00 |
| Y | * column 2, line 16 - line 29 * * column 3, line 61 - line 63 * * column 7, line 50 - column 10, line 25 * * figures 1-7 * ----- | 1-13 | |
| Y | US 8 256 706 B1 (SMITH THOMAS R [US] ET AL) 4 September 2012 (2012-09-04) | 1-13 | |
| A | * column 4, line 8 - column 7, line 50; figures 1-10 * ----- | 14,15 | |

**TECHNICAL FIELDS SEARCHED (IPC)**

F42B
B64C
B64F
B64D

The present search report has been drawn up for all claims

| Place of search | Date of completion of the search | Examiner |
|---|---|---|
| The Hague | 7 January 2019 | Seide, Stephan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 27 5105

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2019

| Patent document cited in search report | | Publication date | Patent family member(s) | | Publication date |
|---|---|---|---|---|---|
| US 7114685 | B1 | 03-10-2006 | AT<br>EP<br>US | 519672 T<br>1602575 A2<br>7114685 B1 | 15-08-2011<br>07-12-2005<br>03-10-2006 |
| US 8256706 | B1 | 04-09-2012 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7114685 B